# EUROPEAN PATENT SPECIFICATION

(11) **EP 2 304 285 B1**
(45) Date of publication and mention of the grant of the patent: **25.04.2012**
(21) Application number: 09763414.1
(22) Date of filing: 09.06.2009
(51) Int. Cl.: F16K 11/22

(54) **EXPANSION VALVE**
EXPANSIONSVENTIL
VANNE DE DÉTENTE

(30) Priority: 09.06.2008 US 59902
(43) Date of publication of application: 06.04.2011
(73) Proprietor: Parker-Hannifin Corporation, Cleveland, Ohio 44124-4141 (US)
(72) Inventor: PARKER, Christian, Washington MO 63090 (US); WROCKLAGE, David, Washington MO 63090 (US)
(74) Representative: Belcher, Simon James
(86) International application number: PCT/US2009/046690
(87) International publication number: WO 2009/152123

(56) References cited:
- EP-A- 1 607 695
- GB-A- 243 492
- US-A- 2 084 755
- US-A- 2 707 868

## Description

### TECHNICAL FIELD

The present invention relates, in general, to a distributor expansion valve of a heat pump system, and in particular, to a distributor expansion valve having a radial mixing chamber wherein the hot gas inlet to the chamber is offset from axial centreline of the valve to promote mixing of hot gas and liquid entering the radial mixing chamber.

### BACKGROUND

A heat pump system can be used to control the temperature of a certain medium such as, for example, the air inside of a building. A heat pump system generally comprises an evaporator, a condenser, a compressor and a series of lines (e.g., pipes, tubes, ducts) connecting these components together so that a refrigerant fluid can cycle through them. Typically, the evaporator is located adjacent to or within the medium (e.g., it is located inside the building) and the condenser is located remote from the medium (e.g., it is located outside of the building).

A heat pump system can operate in a first (forward) direction, wherein it cools the temperature-controlled environment, and a second (reverse) direction, wherein it heats the temperature-controlled environment. In the forward (i.e., cooling) direction, the evaporator is the heat-absorbing component (i.e., it absorbs heat from, and thus cools, the medium) and the condenser is the heat-rejecting component (i.e., it rejects the absorbed heat to the remote location). In the reverse (i.e., heating) direction, the evaporator is the heat-rejecting component and the condenser is the heat-absorbing component.

In a heat pump cycle, refrigerant fluid enters the heat-absorbing component as a low pressure and low-temperature vapour-liquid. As the vapour-liquid passes through the heat-absorbing component, it is boiled into a low pressure gas state. From the heat-absorbing component, the fluid passes through the compressor, which increases the pressure and temperature of the gas. From the compressor, the high pressure and high temperature gas passes through the heat-rejecting component whereat it is condensed to a liquid.

A heat pump system will often include an expansion valve immediately (or almost immediately) upstream of the heat-absorbing component. When the high pressure and high temperature liquid from heat-rejecting component passes through the expansion valve, the pressure of the fluid is reduced (e.g., the expansion valve throttles the fluid) and fluid is converted to a low pressure and low temperature vapour/liquid state. This low pressure and low temperature vapour/liquid is received by the heat-absorbing component to complete the cycle.

A heat pump cycle will often also include a distributor downstream of the expansion valve. A distributor commonly includes a mixing compartment whereat fluid is evenly distributed to a plurality of tubes which feed the multiple circuits of the heat-absorbing component. A distributor can also include a flow restriction (e.g., a nozzle) upstream of its mixing compartment which increases the velocity of the fluid just prior to its entry into the mixing compartment to promote a turbulent mixing of liquid and vapour phases.

As was indicated above, when a heat pump system is operating in a first (i.e., forward and/or cooling) direction, the evaporator is the heat-absorbing component, and when it is operating in a second (i.e., reverse and/or heating) direction, the condenser is the heat-absorbing component. Thus, an expansion-distribution assembly may be positioned at the end of the evaporator which is its inlet when fluid travels in the first direction and/or may be positioned at the end of the condenser, which is its inlet when fluid travels in the second direction.

When a heat pump system is operating in a direction corresponding to the expand-then-distribute direction, liquid (at a high pressure and high temperature) will pass through the expansion-distribution assembly and will be converted into a vapour/liquid (at a lower pressure and a lower temperature) for receipt by the heat-absorbing component. When the heat pump system is operating in the opposite direction, fluid passes "backwards" through the expansion-distribution assembly. A reverse flow bypass is provided so that the fluid does not have to pass (backwards) through the throttling flow path.

The problem with certain applications, for example an environmental chamber, is that there is a need for the system to run at a nominal capacity rating for one set-point and a lower capacity rating for another set-point. With this two-staged system, the expansion valve, distributor and nozzle are sized for the first set-point to allow maximum capacity. When the system is required to run at the second set-point, for instance low load conditions, the existing expansion valve, distributor, and nozzle become grossly oversized. During operation at low load, refrigerant velocities become very low and distribution of the refrigerant suffers. Oil logging in the coil may also become an issue due to the low refrigerant velocities. The logged oil, in return, reduces heat transfer and compounds the distribution issues.

One current prior art solution would be to run parallel liquid lines with separate distributors and nozzles matched for each set-point. Solenoid valves would control which liquid line to use. However, this solution is complicated and expensive.

US-2707868 discloses a refrigeration system which includes a mixing valve. The mixing valve has a casing with liquid and gas inlets and an outlet for the mixed fluid. A valve member within the casing enables the proportions of liquid and gas to be varied.

### SUMMARY

The invention provides an expansion valve assembly as defined in claim 1.

### BRIEF DESCRIPTION OF THE DRAWINGS

Embodiments of this invention will now be described in further detail with reference to the accompanying drawings, in which:
Figure 1 is a perspective view of an embodiment of the expansion valve of the present invention;
Figure 2 is a partial cross-sectional, perspective view of the expansion valve shown in Figure 1, highlighting the orientation of the hot gas in tube and the radial mixing chamber;
Figure 3 is a partial cross-sectional, perspective view of the expansion valve shown in Figure 1, the cross-section taken through the centre of the distributor body and the liquid line;
Figure 4 is a partial cross-sectional, perspective view of the expansion valve shown in Figure 1, highlighting the nozzle of the hot gas in tube and the radial mixing chamber;
Figure 5 is another partial cross-sectional, perspective view of the expansion valve shown in Figure 1, highlighting the nozzle of the hot gas in tube and the radial mixing chamber; and
Figure 6 is a cross-sectional view of the distributor body and the hot gas in tube of the valve shown in Figure 1, highlighting the tapered shroud and the blended bowl forming the radial mixing chamber.

### DETAILED DESCRIPTION OF THE DRAWING

The expansion valve of the present invention is relevant to the subject matter of US-A-2007/0245769, which discloses a device that combines a stepper motor actuator into a distributor body to provide proper system pressure drop and variable orifice control of refrigerant entering the evaporating coil via circuit tubes.

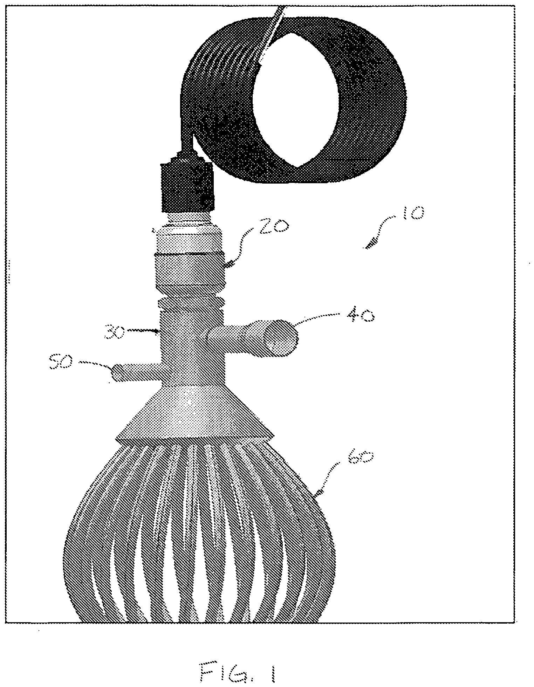

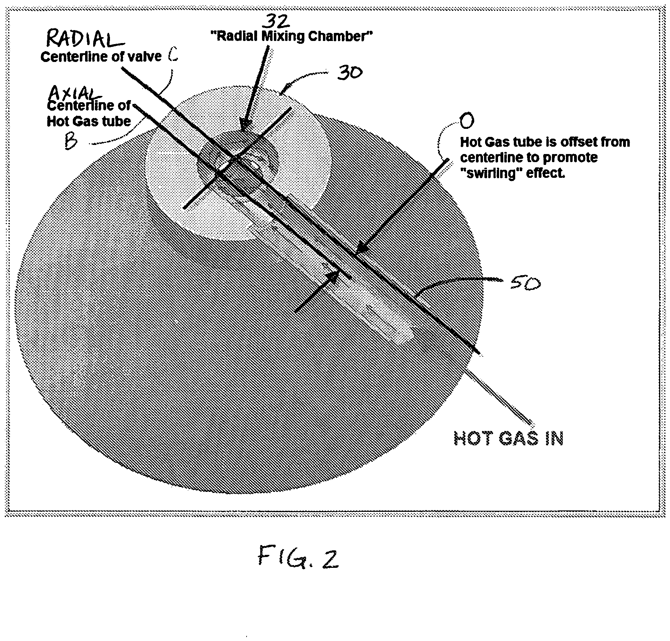

Referring now to Figure 1, an embodiment of the expansion valve 10 of the present invention is shown with a motor drive 20, a distributor body 30 having a liquid line 40, a gas tube 50, and coil circuits 60 attached thereto. The valve 10 utilizes a mixing chamber 32, referred to herein as a radial mixing chamber, shown in cross-section with the gas tube 50 in Figure 2. The gas tube 50, providing hot gas flow into the distributor body 30, is generally tangentially located with respect to the radial mixing chamber 32. More particularly, the gas tube 50 has an axial centreline B which is shown offset O and parallel to a radial centreline C of the valve 10 perpendicular to the axial centreline A (not shown) of the valve 10.

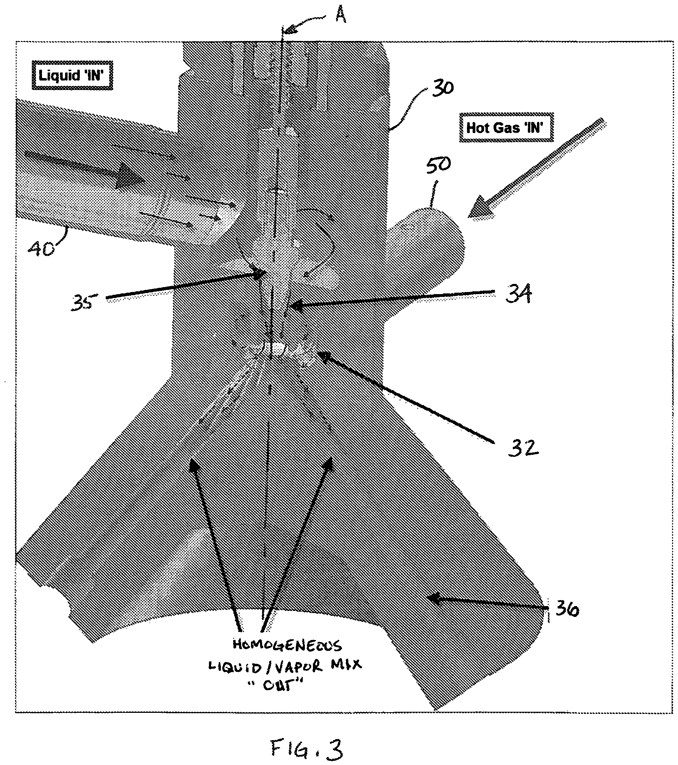

Referring now to Figure 3, the distributor body includes a port 34 and a pin 35 which controls the flow of liquid, entering the distributor body 30 from the liquid line 40 (see arrows depicting flow through valve 10), to the radial mixing chamber 32. The axial centreline of the valve 10 and distributor body 30 is shown at A. The hot gas flowing tangentially into the chamber 32 from the gas tube 50 will provide violent mixing of two-phase refrigerant leaving the port 34 and hot gas entering the "hot gas" tube 50. The mixing is accomplished by the "swirling" effect and temperature differential of the hot gas flow into the two-phase mixture leaving the port 34. This mixing will theoretically provide a homogeneous mixture of liquid/vapour refrigerant before it enters the circuits 36, which provide passageways for the homogenous liquid/vapour mix to enter the coil circuits 60 .

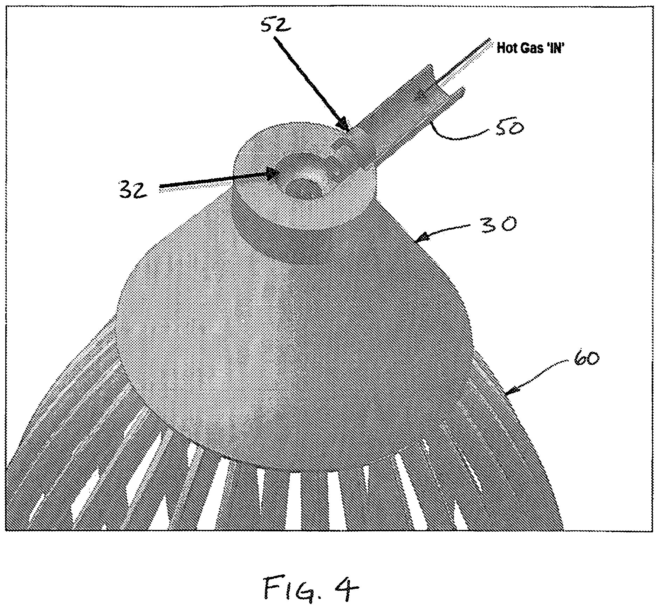

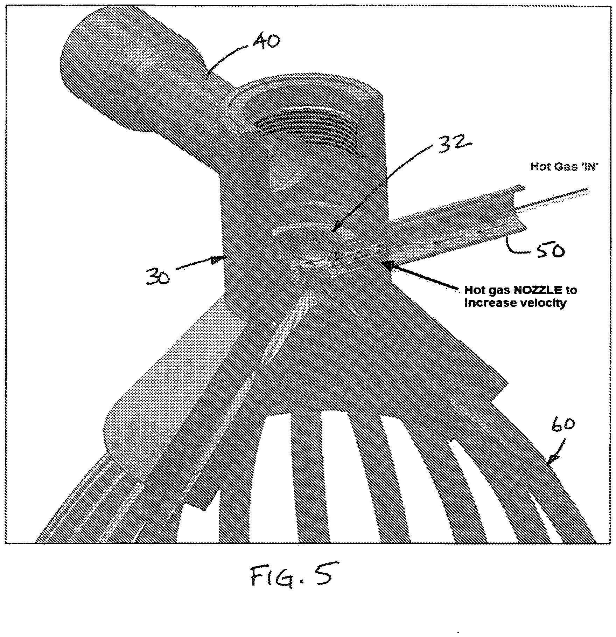

The amount of hot gas flow entering the mixing chamber 32 can be mechanically or electronically controlled separately in response to system conditions. It is advantageous to flow hot gas at low load conditions into the chamber 32 to properly mix low velocity two-phase refrigerant leaving the port 34. This addition of hot gas at low flow provides proper refrigerant mixing, helps maintain high refrigerant velocities for proper distribution and may also aid in reducing the potential of oil logging in the refrigerant coil. It is also contemplated that a properly sized nozzle 52 can be inserted into the hot gas tube at the entrance to the mixing chamber to accelerate the hot gas as it enters the mixing chamber 32, as best shown in Figures 4 and 5 with the hot gas flow shown with arrows.

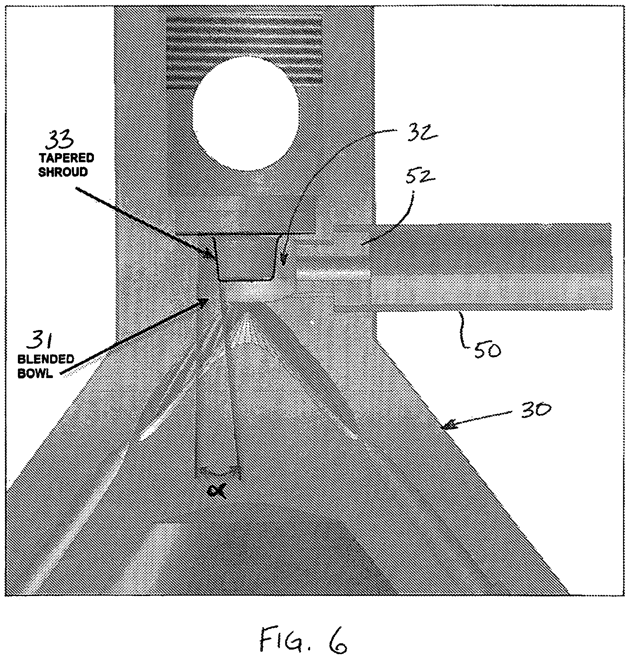

As best shown in Figure 6, the port 34 is formed with a cone shaped 33 portion. This proposed design also allows the system to operate in reverse cycle whereas the sub-cooled liquid refrigerant would flow back up through the circuits, into the mixing chamber and out the gas port. The reverse cycle flow is typical in previous designs, such as distributors with auxiliary side connectors.

Referring to the problem of the prior art discussed in the Background, the proposed invention would provide one component to operate and meet all demands, assuming the component is sized to meet maximum capacity. Hot gas from the discharge line could be supplied to the proposed invention at low load operation. This, in turn, would provide rapid mixing of low velocity two-phase refrigerant inside the "radial mixing chamber". Increased homogenous refrigerant velocities help feed each coil circuit with the same amount of refrigerant for improved distribution. Oil logging would also be reduced or eliminated due to the increase of refrigerant velocity. The compressors would also remain loaded to avoid "short cycling" or hard starts.

## Claims

1. An expansion valve assembly (10) comprising:
a distributor body (30) having a liquid inlet (40), a port (34) having a selectively moveable pin (35) to allow liquid from the liquid inlet past the port, a gas inlet (50), a mixing chamber (32) having an axial centreline that is the axial centreline (A) of the valve, and a plurality of circuits (36), in which the mixing chamber is positioned between the port and the plurality of circuits,
**characterised in that** the gas inlet has an axial centreline (B) that is offset from the axial centreline (A) of the mixing chamber.

2. The expansion valve assembly of claim 1, which includes a nozzle (52) positioned in the gas inlet (50).

3. The expansion valve assembly of claim 1, in which the port (34) extends into the mixing chamber (32) forming an annular interior wall of the mixing chamber.

4. The expansion valve assembly of claim 3, in which the annular interior wall is axially tapered radially inward toward an axial inlet to the plurality of circuits (36).

5. The expansion valve assembly of claim 1, in which the axial end of the mixing chamber (32) is blended radially inward toward an axial inlet to the plurality of circuits (36).

6. The expansion valve assembly of claim 1, in which a wall of the gas inlet (50) is generally tangentially oriented with the wall of the radial mixing chamber (32).

## Patentansprüche

1. Expansionsventilanordnung (10) aufweisend:
einen Verteilerkörper (30) mit
einem Flüssigkeitseinlass (40);
einer Durchgangsöffnung (34), die einen gezielt beweglichen Stift (35) umfasst, sodass Flüssigkeit von dem Flüssigkeitseinlass an der Durchgangsöffnung vorbei gelassen werden kann;
einem Gaseinlass (50);
einer Mischkammer (32), die eine axiale Mittellinie hat, welche die axiale Mittellinie (A) des Ventils ist; und mit
einer Mehrzahl von Leitungen (36);
wobei die Mischkammer zwischen der Durchgangsöffnung und der Mehrzahl von Leitungen angeordnet ist,
**dadurch gekennzeichnet, dass**
der Gaseinlass eine axiale Mittellinie (B) hat, welche gegenüber der axialen Mittellinie (A) der Mischkammer versetzt ist.

2. Expansionsventilanordnung nach Anspruch 1, die eine Düse (52) umfasst, die in dem Gaseinlass (50) angeordnet ist.

3. Expansionsventilanordnung nach Anspruch 1, bei welcher die Durchgangsöffnung (34) sich in die Mischkammer (32) erstreckt und eine ringförmige Innenwand der Mischkammer bildet.

4. Expansionsventilanordnung nach Anspruch 3, bei der die ringförmige Innenwand radial nach innen in Richtung auf einen zu der Mehrzahl von Leitungen (36) führenden axialen Einlass zu axial gestuft ist.

5. Expansionsventilanordnung nach Anspruch 1, bei der das axiale Ende der Mischkammer (32) radial nach innen in einen zu der Mehrzahl von Leitungen (36) führenden axialen Einlass übergeht.

6. Expansionsventilanordnung nach Anspruch 1, bei der eine Wand des Gaseinlasses (50) im Wesentlichen tangential zur Wand der radialen Mischkammer (32) orientiert ist.

## Revendications

1. Ensemble de vanne de détente (10) comprenant :
un corps distributeur (30) ayant une admission de liquide (40), un orifice (34) comportant une broche sélectivement mobile (35) pour permettre au liquide provenant de l'admission de liquide de passer l'orifice, une admission de gaz (50), une chambre de mélange (32) ayant une ligne centrale axiale qui est la ligne centrale axiale (A) de la vanne, et une pluralité de circuits (36), dans lequel la chambre de mélange est positionnée entre l'orifice et la pluralité de circuit,
**caractérisé en ce que** l'admission de gaz comporte une ligne centrale axiale (B) qui est décalée de la ligne centrale axiale (A) de la chambre de mélange.

2. Ensemble de vanne de détente selon la revendication 1, qui comprend une buse (52) positionnée dans l'admission de gaz (50).

3. Ensemble de vanne de détente selon la revendication 1, dans lequel l'orifice (34) s'étend dans la chambre de mélange (32) formant une paroi intérieure annulaire de la chambre de mélange.

4. Ensemble de vanne de détente selon la revendication 3, dans lequel la paroi intérieure annulaire est axialement effilée radialement vers l'intérieur en direction d'une admission axiale vers la pluralité de circuits (36).

5. Ensemble de vanne de détente selon la revendication 1, dans lequel l'extrémité axiale de la chambre de mélange (32) est mélangée radialement vers l'intérieur en direction d'une admission axiale vers la pluralité de circuits (36).

6. Ensemble de vanne de détente selon la revendication 1, dans lequel une paroi de l'admission de gaz (50) est généralement orientée tangentiellement à la paroi de la chambre de mélange radiale (32).
